Europäisches Patentamt

European Patent Office

Office européen des brevets

(19)

(11) Veröffentlichungsnummer: **0 263 235**
A1

(12) # EUROPÄISCHE PATENTANMELDUNG

(21) Anmeldenummer: 87106064.6

(22) Anmeldetag: 25.04.87

(51) Int. Cl.⁴: **A 61 C 13/225**

(30) Priorität: 29.04.86 US 857123

(43) Veröffentlichungstag der Anmeldung: 13.04.88
Patentblatt 88/15

(84) Benannte Vertragsstaaten: AT BE CH DE ES FR GB IT LI LU NL SE

(71) Anmelder: Obersat, Adam, Logenstrasse 4,
D-6750 Kaiserslautern (DE)

(72) Erfinder: Obersat, Adam, Logenstrasse 4,
D-6750 Kaiserslautern (DE)

(74) Vertreter: Bernhardt, Winfrid, Dr.-Ing.,
Kobenhüttenweg 43, D-6600 Saarbrücken (DE)

(54) Abnehmbare Zahnprothese sowie Bauteil zu ihrer Herstellung.

(57) Für eine auf ein festsitzendes Prothesenteil aufsteckbare abnehmbare Zahnprothese ist eine Vorrichtung zum Anklemmen mit einem Riegelelement bekannt, das durch eine in einem flachen Hohlraum angeordnete Schlangenfeder gefedert ist.

Der Hohlraum (13) soll durch einen seinen Abmessungen angepassten elastischen Gummi- oder Kunststoffkörper (16) mindestens teilweise ausgefüllt werden, der ergänzend zu der Schlangenfeder angeordnet ist oder sie ersetzt.

Der somit ausgefüllte Raum ist der Bakterientätigkeit entzogen. Darüber hinaus lassen sich mechanische Vorteile hinsichtlich der Federung erzielen.

Für ein durch einen flachen Gummiblock o.dgl. gefedertes Riegelelement wird ferner ein Rastelement (17) vorgeschlagen, das an seiner Frontseite eine drehbar gelagerte Walze (18) aufweist.

Patentansprüche:

1. Abnehmbare Zahnprothese (23), die auf ein festsitzendes Prothesenteil (26) aufsteckbar und an ihm anklemmbar ist mittels eines an der Zahnprothese, insbesondere nahe ihrer Unterseite, angeordneten Riegelelementes (1,2;3,4,5;12,16; 16-19;33-35;33,35,36), das durch ein in einem flachen Hohlraum (7;13) angeordnetes federndes Element (1;3;16;35) gefedert ist und ein durch einen Hohlraum geführtes, aus ihm herausragendes steifes Rastelement (2;4;12;17;33,34;33,36) mit einer langgestreckten und schmalen, in eine Kerbe (22) des festsitzenden Prothesenteils (26) einrastenden Frontseite aufweist,

dadurch gekennzeichnet,

daß der Hohlraum (7;13) durch einen seinen Abmessungen angepaßten elastischen Gummi- oder Kunststoffkörper (1;5;16;35) mindestens teilweise ausgefüllt ist, der (5) ergänzend zu einer Feder (3) angeordnet ist oder selbst das federnde Element (1;16;35) bildet.

2. Prothese nach Anspruch 1,
dadurch gekennzeichnet,
daß das Rastelement (12) eine auf den Gummi- oder Kunststoffkörper (16) aufgesetzte Kappe ist.

3. Prothese nach Anspruch 1,
dadurch gekennzeichnet,
daß das Rastelement (17;33,34;33,36) eine drehbar gelagerte Walze (18) aufweist.

4. Prothese nach Anspruch 3,

   dadurch gekennzeichnet,

   daß die Walze (33) in einer ihr angepaßten Mulde (34;36) gelagert ist, die sie vorzugsweise auf mehr als 180° umschließt.

5. Prothese nach Anspruch 4,

   dadurch gekennzeichnet,

   daß die Walze (33) innerhalb des Hohlraums in der Mulde (34;36) gelagert ist.

6. Prothese nach Anspruch 4 oder 5,

   dadurch gekennzeichnet,

   daß die Mulde (34;36) durch einen Rohrabschnitt gebildet ist.

7. Prothese nach einem der Ansprüche 1 bis 6,

   dadurch gekennzeichnet,

   daß der das federnde Element bildende Gummi- oder Kunststoffkörper (1;16;35) ein flacher Block von 0,2 bis 0,8 mm, vorzugsweise 0,3 bis 0,6 mm, Dicke, von 1,0 bis 2,5 mm Breite und von 0,5 bis 1,0 mm Länge ist.

8. Bauteil zur Herstellung einer abnehmbaren Zahnprothese nach einem der Ansprüche 1 bis 7,

   gekennzeichnet durch

   ein in einem flachen Hohlraum (7;13) an der Zahnprothese anzuordnendes Riegelelement (1,2,3,4,5;12,16;16-19;33-35; 33,35,36), das ein Rastelement (2;4;12;17;33,34;33,36) mit einer langgestreckten schmalen Frontseite und ein federndes Element (1;3;16;35) aus einem oder, ergänzend zu einer Feder (3), mit einem Gummi- oder Kunststoffkörper (1;16;35 bzw. 5) aufweist, der den Abmessungen des genannten Hohlraums (7;13) angepaßt ist und ihn mindestens teilweise ausfüllt, und/oder durch ein flaches Gehäuse (13) oder einen flachen Halbkasten (7) oder Gießkern (11) zur Bildung des genannten Hohlraums.

9. Bauteil nach Anspruch 8,

dadurch gekennzeichnet,

daß es ein vorgefertigtes Geschiebe mit dem genannten Gehäuse als Bestandteil des einen Geschiebeteils und der genannten Kerbe als Bestandteil des anderen Geschiebeteils ist.

10. Bauteil nach Anspruch 8,

dadurch gekennzeichnet,

daß es ein vorgefertigtes Formmodellteil (6) mit dem genannten flachen Halbkasten (7) und/oder Gießkern (11) als Bestandteil ist.

1

Beschreibung:

Adam OBERSAT, D-6750 Kaiserslautern

"Abnehmbare Zahnprothese sowie Bauteil zu ihrer Herstellung"

---

Die Erfindung betrifft eine abnehmbare Zahnprothese, die auf ein festsitzendes Prothesenteil aufsteckbar und an ihm anklemmbar ist mittels eines an der Zahnprothese, insbesondere nahe ihrer Unterseite, angeordneten Riegelelementes, das durch ein in einem flachen Hohlraum angeordnetes federndes Element gefedert ist und ein durch den Hohlraum geführtes, aus ihm herausragendes steifes Rastelement mit einer langgestreckten und schmalen, in eine Kerbe des festsitzenden Prothesenteils einrastenden Frontseite aufweist.
Ferner betrifft die Erfindung ein Bauteil zur Herstellung einer solchen Prothese.

Die genannte Prothese ist bekannt aus der EU-A-0 136 671. Ihre Klemmvorrichtung ist mit ihrer nur innerhalb einer Ebene U-förmig oder S-förmig gebogenen Feder außerordentlich flach. Die Klemmvorrichtung ist damit in Fällen einsetzbar, in denen man bisher zu ganz anderen Mitteln greifen mußte, wie einen Zahn umfassenden, sichtbaren Klammern. Von den übrigen Vorteilen sei hier nur erwähnt, daß sie ohne Beanspruchung wesentlicher Höhe auch an einem vorgefertigten Geschiebe angeordnet werden kann.

Die vorliegende Erfindung will diese Technik weiterentwickeln.
Insbesondere liegt ihr die Aufgabe zugrunde, die Hygiene zu
verbessern.

Gemäß der Erfindung ist bei einer Prothese der eingangs genannten Art vorgesehen, daß der Hohlraum durch einen seinen Abmessungen angepaßten elastischen Gummi- oder Kunststoffkörper
mindestens teilweise ausgefüllt ist, der ergänzend zu einer
Feder angeordnet ist oder selbst das federnde Element bildet.

Der mit dem Gummi- oder Kunststoffkörper ausgefüllte Hohlraum
bietet keinen Platz für Bakterien. Man kann auf diese Weise
jegliche Bakterientätigkeit vermeiden, ausgenommen in einem
geringfügigen Spiel zwischen dem federnden Element und dem
Rastelement einerseits und der Hohlraumwand andererseits.

Der ergänzend zu einer Feder angeordnete Gummi- oder Kunststoffkörper wird aus einem sehr weichen Silikongummi bestehen. Je
nach der Federform kann er auch mehrteilig sein.

Der Gummi- oder Kunststoffkörper, der selbst das federnde
Element bildet, wird aus einem der gewünschten Federkennlinie
entsprechenden Material bestehen. Er könnte bei Bedarf durch
Einschnitte oder Ausschnitte nachgiebiger gestaltet werden,
doch wird diese, dem Ziel der Raumausfüllung zuwiderlaufende,
Maßnahme kaum nötig sein und höchstens vielleicht dann in Betracht kommen, wenn man die Länge des Hohlraums besonders kurz
bemessen will. Ohnehin erlaubt aber der Gummi- oder Kunststoffkörper als federndes Element eine erhebliche Verringerung
dieser Länge gegenüber der Metallfeder. Er braucht beispielsweise nur 0,5 bis 1,0 mm lang zu sein.

Im übrigen liegen seine Maße beispielsweise bei 0,2 bis 0,8 mm,
vorzugsweise 0,3 bis 0,6 mm, Höhe und 1,0 bis 2,5 mm Breite.

Das Rastelement kann klemmend auf dem Gummi- oder Kunststoffkörper sitzen oder mit ihm verklebt oder in sonstiger Weise
mit ihm verbunden sein.

Nach einer vorteilhaften Weiterbildung der Erfindung weist das Rastelement, vorzugsweise an einer auf dem Gummi- oder Kunststoffkörper aufgesetzten Kappe, eine drehbar gelagerte schmale Walze, z.B. aus Hartmetall oder aus Saphir, auf. Die Walze erleichtert das Abnehmen und auch das Einsetzen der Prothese und verhindert Verschleiß.

Vorzugsweise ist die Walze in einer ihr angepaßten Mulde gelagert, so daß sie nicht auf Biegung beansprucht ist. Um die Walze zu halten, wird die Mulde sie um mehr als 180° umschließen. Das ist allerdings nicht unbedingt nötig, wenn die Walze innerhalb des Gehäuses gelagert ist und durch eingewinkelte Vorderkanten des Gehäuses darin gehalten ist. Die Lagerung der Walze in dem Hohlraum ergibt einen kurzen Kräftefluß direkt nach der Wand des Hohlraums. Es ist kein Zwischenglied nötig, das eigene Länge beansprucht. Die Mulde kann durch einen bloßen Rohrabschnitt gebildet sein. Das Riegelelement wird dann insgesamt kurz, z.B. nur 0,5 bis 0,8 mm lang.

Das Riegelelement wird Gegenstand industrieller Vorfertigung sein, ebenso ein flaches Gehäuse oder ein flacher Halbkasten oder Gießkern zur Bildung des genannten Hohlraums. In der Regel werden ein Riegelelement und ein mit ihm zusammengehörendes Gehäuse oder ein mit ihm zusammengehörender flacher Halbkasten oder Gießkern zu einem Bausatz zusammengefaßt werden.

Das gilt auch für umfassendere vorgefertigte Teile.

Hier sei als erstes ein Geschiebe erwähnt mit dem genannten Gehäuse als Bestandteil des einen Geschiebeteils und der genannten Kerbe als Bestandteil des anderen Geschiebeteils. Das zugehörige Riegelelement kann bereits in das Gehäuse eingesetzt oder getrennt beigefügt sein.
Andere Bauteile können vielerlei vorgefertigte Formmodelle mit dem genannten flachen Halbkasten oder Gießkern als Bestandteil sein, mittels derer der Hohlraum in einem gegossenen Metallgerüst der Prothese erzeugt wird. Auch diesen wird das Riegelelement beigefügt sein.

Im folgenden sei die Erfindung anhand von Ausführungsbeispielen weiter verdeutlicht.

Fig. 1 zeigt ein Riegelelement einer Zahnprothese im Längsschnitt,

Fig. 2 zeigt ein in einen Hohlraum eingesetztes anderes Riegelelement im Längsschnitt,

Fig. 3 zeigt einen Bausatz,

Fig. 4 zeigt ein in ein Gehäuse eingesetztes drittes Riegelelement in Seitenansicht,

Fig. 5 zeigt das Riegelelement nach Fig. 4 in dem Gehäuse in Draufsicht,

Fig. 6 zeigt ein in ein Gehäuse eingesetztes viertes Riegelelement in Seitenansicht,

Fig. 7 zeigt das Riegelelement nach Fig. 6 in dem Gehäuse in Draufsicht,

Fig. 8 zeigt ein in ein Gehäuse eingesetztes fünftes Riegelelement in Seitenansicht,

Fig. 9 zeigt ein in ein Gehäuse eingesetztes sechstes Riegelelement in Seitenansicht,

Fig. 10 zeigt ein Anwendungsbeispiel.


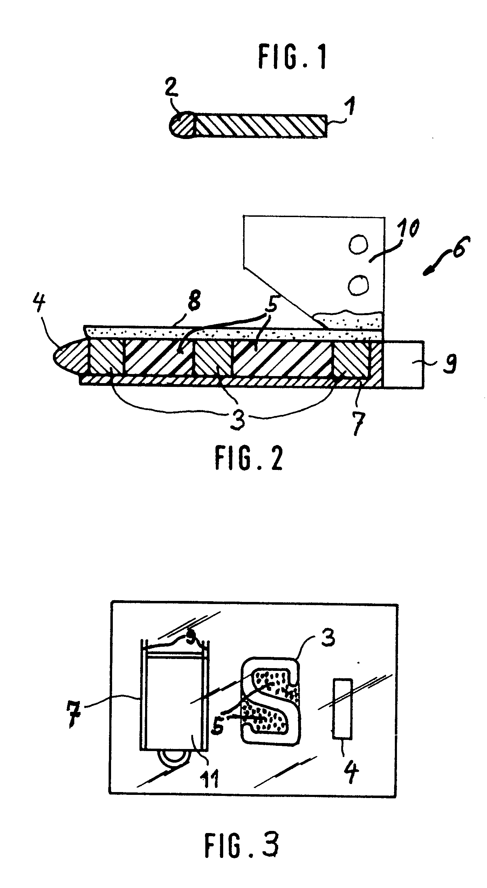

Das Riegelelement nach Fig. 1 setzt sich zusammen aus einem federnden Block 1 aus Silikon-Gummi oder einem anderen elastischen Kunststoff und einem mit ihm verbundenen, z.B. verklebten, Rastelement 2.

Das Riegelelement wird in einen ihm angepaßten Hohlraum eingesetzt, wie es unten für die anderen Ausführungsbeispiele näher beschrieben ist.


Das Riegelelement nach Fig. 2 setzt sich zusammen aus einer Schlangenfeder 3, wie sie in Fig. 3 in Draufsicht zu sehen ist, einem frontseitig auf die Schlangenfeder 3 aufgesetzten Rastelement 4 und einer die Zwischenräume der Schlangenfeder ausfüllenden Masse aus sehr weichem Silikon-Gummi oder einem anderen vergleichbaren Material. Die Masse 5 bildet somit einen die Schlangenfeder 3 zu einem Quader vervollständigenden, infolge der Form der Schlangenfeder zweigeteiltem Gummikörper 5.

Das Riegelelement ist in Fig. 2 dargestellt in einem Hohlraum eines Formmodellteils 6, das diesen Hohlraum dann in einem gegossenen Metallgerüst einer Prothese erzeugt. Das Formmodellteil 6 weist einen Halbkasten 7 mit einer Abdeckung 8 aus ausbrennbarer Modellmasse auf. An den Halbkasten schließen sich Fortsetzungen 9 seiner Seitenwände an, die später der Verankerung dienen, und an die Abdeckung 8 ein Griffteil 10, mittels dessen das Formmodellteil gefaßt und besser eingeformt werden kann. Im Zustand des Formmodellteils befindet sich in dem Hohlraum statt des Riegelelements ein Gießkern.

Während die Silikon-Gummimasse in der Schlangenfeder 3 ausschließlich der Raumerfüllung dient und keine Federkraft entwickelt, erfüllt der aus einem härteren Silikon-Gummi bestehende Block 1 beide Funktionen. Er stellt einen wesentlich geringeren Aufwand als die Schlangenfeder 3 dar. Auch kann er, z.B. mit einem Tropfen eines Klebemittels an seinem Ende, auf einfache Weise sicher und doch abreißbar in dem Hohlraum gehalten werden. Die Verbindung zwischen dem Block 1 und dem Rastelement 2 kann eine Verklebung sein. Der Block 1 könnte aber auch an dem Rastelement 2 anvulkanisiert sein.
Der Block 1 darf den Hohlraum, in den er eingesetzt wird, nicht lückenlos füllen, da die Gummimasse in sich nicht kompresssibel ist. Ein wenig Spiel an der Oberfläche genügt jedoch.

Fig. 3 zeigt einen industriell vorgefertigten Bausatz mit einem einen Gießkern enthaltenden Halbkasten 7, eine mit dem weichen Gummikörper 5 gefüllte Schlangenfeder 3 und einem von dieser getrennten, jedoch in geeigneter Weise auf sie aufsetzbaren Rastelement 4. Im vorliegenden Beispiel handelt es sich um die Teile aus Fig. 2, wobei lediglich die Abdeckung 8 und das Griffteil 10 weggelassen sind. Der Halbkasten 7 könnte aber auch allein mit dem Gießkern 11 oder es könnte auch der Gießkern 11 allein Teil des Bausatzes sein oder ein vollständiges Gehäuse, das nicht an- oder eingegossen wird, sondern angeklebt oder angelötet wird. Statt der Schlangenfeder 3 und dem Rastelement 4 kämen auch das Riegelelement nach Fig. 1 und die entsprechenden Teile der anderen Ausführungsbeispiele in Betracht.

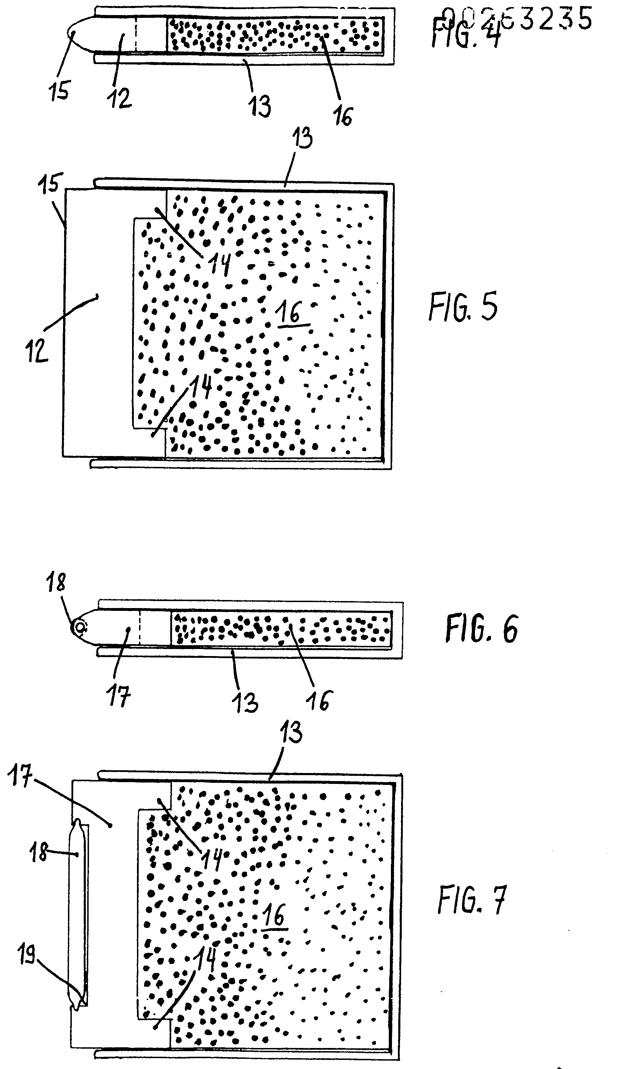

Fig. 4 und 5 zeigen ein Riegelelement wie nach Fig. 1 mehr im Detail.

Ein Rastelement 12 ist in einem einen flachen Hohlraum bildenden, quaderförmigen Gehäuse 13 geführt, indem es sich teils auf voller Breite, teils mit zwei seitlichen Rücksprüngen 14, bis an dessen beide Seitenwandungen erstreckt. An seiner Frontseite verjüngt es sich zu einer abgerundeten Spitze 15. Hinter dem Rastelement 12 füllt das Gehäuse 13 mit Ausnahme eines schmalen Zwischenraums an dessen Wand ein elastischer Gummi- oder Kunststoffkörper 16 aus. Er ist vorzugsweise mit dem Rastelement 12 verklebt, so daß nur ein Teil zu handhaben ist, braucht es aber nicht zu sein. Das Rastelement 12 bildet mit seiner Einfassung des Gummi- oder Kunststoffkörpers 16 durch die Rücksprünge 14 eine Art Kappe auf dem Kunststoffkörper. Es könnte diesen stattdessen auch oben und unten umfassen.

Das Ausführungsbeispiel nach Fig. 6 und 7 unterscheidet sich von demjenigen nach Fig. 4 und 5 dadurch, daß das Rastelement, hier mit der Bezugsnummer 17 versehen, statt der abgerundeten Spitze 15 eine Walze 18 für den Eingriff in die Kerbe des anderen Prothesenteils aufweist. Für die Lagerung der Walze 18 ist das Rastelement 17 mit einem Einschnitt 19 versehen, an dessen beiden Enden die Walze in entsprechenden Bohrungen mit entsprechenden Achsstummeln gelagert ist. Die Walze 18 steht frontseitig ein wenig über die übrige Frontseite des Rastelements 17 vor.

Das Gehäuse 13 ist in erster Linie dazu bestimmt, angelötet oder angeklebt oder in Kunststoffmasse eingegossen zu werden. Seine Wanddicke beträgt beispielsweise 0,2 mm.

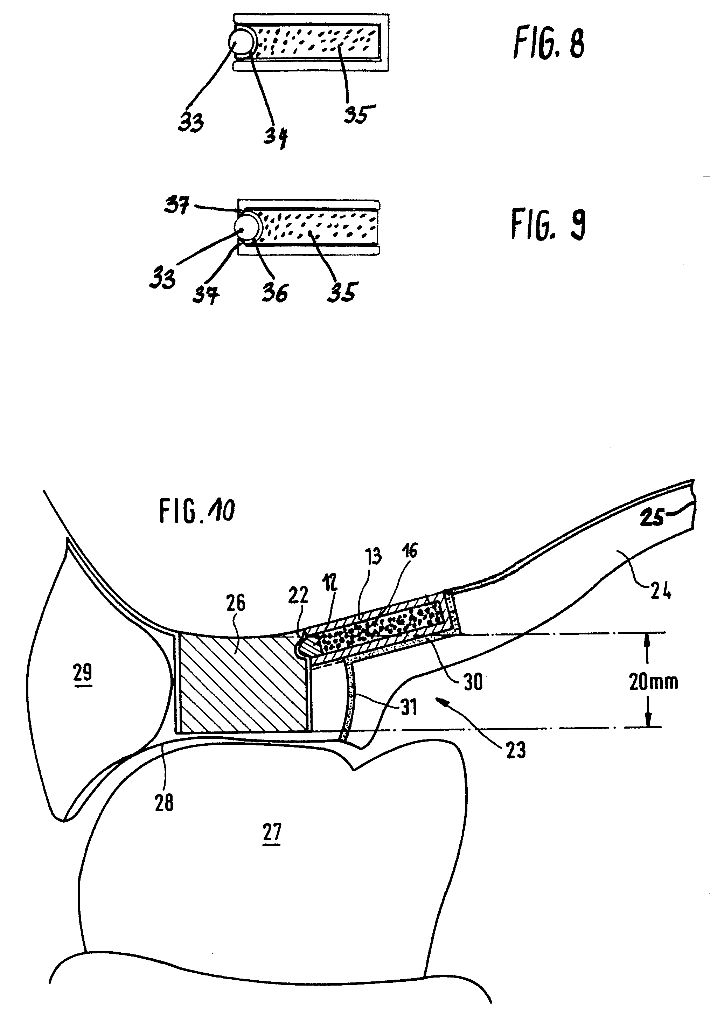

Nach Fig. 8 ist eine Walze 33 in einer Mulde gelagert, und zwar noch innerhalb des Gehäuses, aus dem sie beispielsweise nur um 0,05 mm herausragt. Die Mulde ist durch einen Rohrabschnitt 34 gebildet. Ein Gummikörper 35 ist an diesen anvulkanisiert. Das so gebildete Riegelelement 33 bis 35 ist beispielsweise durch eine leichte Verklebung an der Hinterseite des Gummikörpers 35 mit der Gehäusewand in dem Gehäuse gehalten. Die Walze 33 ist in dem Rohrabschnitt 34 dadurch gehalten, daß dieser sie um etwas mehr als 180° umfaßt; in Längsrichtung halten sie die Seitenwände des Gehäuses.

Das Riegelelement nach Fig. 9 besteht aus einer gleichen Walze 33, einem gleichen Gummikörper 35 und einem die Walze etwas weniger umfassenden Rohrabschnitt 36. Hier ist die Walze außerdem durch zwei Einkantungen 37 des Gehäuses gehalten. Der Rohrabschnitt 36 könnte insofern auch auf den halben Umfang der Walze oder noch weniger beschränkt sein. Allerdings muß der Gummikörper 35 hier von hinten her gehalten werden. In Betracht käme auch, das Gehäuse hinten zu schließen und das Riegelelement von einer offenen Seite her einzusetzen.

Die Ausführungsbeispiele nach Fig. 8 und 9 eignen sich besonders als Bestandteil eines vorgefertigten Geschiebes.

Fig. 10 zeigt als Anwendungsbeispiel für ein Gehäuse und ein Riegelelement etwa nach Fig. 4 und 5 einen linken Abschnitt einer Prothese 23; der Verbindungsbügel 24 zum rechten Abschnitt ist bei 25 weggebrochen. Der gezeichnete linke Abschnitt der Prothese ist auf einen Balken 26 aufgesteckt und abgestützt, der festsitzend mit zwei Zahnkronen, eine unter und eine über der Zeichenebene, verbunden ist. Die Prothese 23 bietet dem dargestellten Zahn 27 des Unterkiefers eine Gegenfläche 28 und ist außen mit einer Verblendung 29 aus Kunststoff oder Keramik versehen, die optisch einen Zahn darstellt. Das Gehäuse 13 ist in einer nach seiner Größe bemessenen Ausnehmung der Prothese 23 angeordnet und mittels einer punktiert gezeichneten Kunststoff- oder Lotschicht 30 befestigt. Die Kerbe 22, mit der das Riegelelement zusammenwirkt, ist in dem Balken 26 angeordnet.

Dank seiner geringen Höhe konnte das Gehäuse 13 hier in die Prothese 23 und weitgehend sogar in den Verbindungsbügel 24 integriert werden und ist darunter noch ausreichend Platz für eine den Verbindungsbügel 24 mit dem übrigen Prothesenteil verbindende Kunststoff- oder Lotschicht 31.

Das Gehäuse 13 könnte auch an dem Verbindungsteil 24 angegossen sein.

Wie aus der Zeichnung ersichtlich, federt beim Aufsetzen der Prothese 23 auf den Balken 26 das Rastelement 12 zunächst unter Zusammendrücken des gegen die Rückwand des Gehäuses 13 abgestützten Gummi- oder Kunststoffkörpers 16 zurück, der es dann in die Kerbe 22 hineindrückt. Mit etwas Kraftaufwendung läßt sich beim Abziehen der Prothese das Rastelement 12 infolge seiner Abschrägung an der Vorderseite wie auch der Abschrägung in der Kerbe 22 entsprechend zurückdrücken.

Alle weiteren Anwendungsmöglichkeiten, die in der EU-A-0 136 671 erwähnt oder beschrieben und gezeichnet sind, bestehen hier mit der entsprechenden Abwandlung des federnden Elements gleichermaßen.

**FIG.1**

**FIG.2**

**FIG.3**

2/3

FIG. 4

15  12  13  16

13

15

12

14

16

14

FIG. 5

18

17  13  16

13

17

18

19

14

16

14

FIG. 6

FIG. 7

00263235

FIG. 8

FIG. 9

FIG. 10

00263235

Nummer der Anmeldung

## Europäisches Patentamt
# EUROPÄISCHER RECHERCHENBERICHT

EP 87 10 6064

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 136 671 (OBERSAT) <br> * Ansprüche 1-12; Figuren 1-12 * | 1 | A 61 C 13/225 |
| D,A | | 8-10 | |
| | --- | | |
| Y | FR-A-1 001 663 (SEVEILHAC et al.) <br> * Seite 1, linke Spalte, Zeilen 8-25; Figuren 1-4 * | 1 | |
| A | | 2 | |
| | --- | | |
| A | US-A-3 216 111 (SINK) <br> * Spalte 2, Zeilen 31-34; Figur 2 * | 1,3-6 | |
| | ----- | | |

|   | RECHERCHIERTE SACHGEBIETE (Int. Cl.4) |
|---|---|
| | A 61 C 13/00 |

Der vorliegende Recherchenbericht wurde für alle Patentansprüche erstellt

| Recherchenort | Abschlußdatum der Recherche | Prüfer |
|---|---|---|
| BERLIN | 23-07-1987 | SIMON J J P |